# EUROPEAN PATENT APPLICATION

(11) **EP 2 528 272 A1**
(43) Date of publication of application: **28.11.2012**
(21) Application number: 10843726.0
(22) Date of filing: 21.09.2010
(51) Int. Cl.: H04L 12/24

(54) **DUAL-ATTACHED PROTECTION SWITCHING METHOD BASED ON VPLS AND SYSTEM THEREOF**

(30) Priority: 22.01.2010 CN 201010100360
(71) Applicant: ZTE Corporation, Shenzhen, Guangdong 518057 (CN)
(72) Inventor: LI, Chunhong, Shenzhen Guangdong 518057 (CN)
(74) Representative: Dr. Weitzel & Partner
(86) International application number: PCT/CN2010/077233
(87) International publication number: WO 2011/088686

(57) **Abstract**

The present invention provides a dual-homing protection switching method based on Virtual Private LAN Service (VPLS), comprising: when determining that a Bidirectional Forwarding Detection (BFD) status of an uplink Pseudo Wire (PW) is converted from a normal status to an abnormal status, a Provider Edge (PE) side modifies the status of the port, connected to a Customer Edge (CE) side, on the PE side to abnormal; and when detecting that a port connected to the PE side is abnormal, the CE side switches service traffic to a slave link. The present invention correspondingly provides a dual-homing protection switching system based on VPLS. The present invention can inform an Attachment Circuit (AC) side in time for switching when a Virtual Circuit (VC) in the network goes wrong by using the linkage of the CE side and PW side, so the present invention can avoid interrupting the traffic and improve the stability of communication.

## Description

### Field of the Invention

The present invention relates to the protection switching technology in the Internet Protocol (IP) network, and in particular to a dual-homing protection switching method and a dual-homing protection switching system based on Virtual Private LAN Service (VPLS).

### Background of the Invention

When developing the communication service, operators put the reliability and fault processing capability of network in a very important position, and the rapid discovery of faults and protection switching of services reflect the fault processing capability of a network. The IP network, in particular the carrier grade Ethernet popular for recent years, especially puts the protection switching capability of network in a paramount position. How to switch the network rapidly when a fault occurs is the objective each equipment supplier pursues. The current bearer network adopts various technologies to improve the checking speed of the network fault and the performance of protection switching, and thereby the influence of network fault on service is reduced. Therefore, the probability of service unavailability is reduced and the reliability of the services is improved.

At present, on a Provider Edge (PE) side the following technologies are usually used: Traffic Engine Fast ReRoute (TE FRR), Virtual Private Network (VPN FRR), Operation, Administration, Maintenance (OAM), Bidirectional Forwarding Detection (BFD) and the like. Such technologies indeed improve the checking speed of the network fault and the performance of protection switching in corresponding scenarios. The traffic is switched to a backup by establishing master/slave links, master/slave pseudo wires or master/slave tunnels when the master link, master pseudo wire or master tunnel is in failure to guarantee the reliability of communication. In the Customer Edge (CE) access layer, the protection switching is usually realized by using the access policy of redundant backup or load sharing, or by enabling the Rapid Spanning Tree Protocol (RSTP), Virtual Router Redundancy Protocol (VRRP) and the like. However, the VRRP is a level 3 redundant backup protocol and cannot be applied to the VPLS technology in the level 2 VPN (L2VPN).

In the VPLS, the frequently used protection switching modes are VPN FRR, TE FRR and the like, and all the protection switching modes protect the network of operators. However, in the VPLS environment, an Attachment Circuit (AC) on a CE side and a Virtual Circuit (VC) on the PE side are independent, that is, the status of the VC on the PE side can not be affected by the AC access, and meanwhile the AC side cannot know whether the status of the VC is normal. Therefore, when the VC in the network goes wrong, the AC side cannot be informed in time for switching, and thereby the short interruption of traffic is further caused.

### Summary of the Invention

In view of this, the present invention mainly provides a dual-homing protection switching method and a dual-homing protection switching system based on VPLS, capable of informing the AC side in time for switching when the VC in the network goes wrong, and thereby the interruption of traffic is avoided and the stability of communication is improved.

The technical solution of the present invention is realized as follows.

A dual-homing protection switching method based on VPLS comprises:
when determining that a Bidirectional Forwarding Detection (BFD) status of an uplink Pseudo Wire (PW) is converted from a normal status to an abnormal status, a Provider Edge (PE) side modifying a status of a port connected to a Customer Edge (CE) side, on the PE side to abnormal; and
when detecting that a port connected to the PE side is abnormal, the CE side switching service traffic to a slave link.
before the CE side switches the service traffic to the slave link, the method further comprises: cleaning an Address Resolution Protocol (ARP) and a Media Access Control (MAC) learnt by the port, connected to the PE side, on the CE side.

The method further comprises:
when determining that the BFD status of the uplink PW is converted from the abnormal status to the normal status and the status of the port, connected to the CE side, on the PE side is abnormal, the PE side modifying the status of the port to normal.

A dual-homing protection switching system based on Virtual Private LAN Service (VPLS), comprising: a Customer Edge (CE) side and a Provider Edge (PE) side, wherein the PE side comprises a Bidirectional Forwarding Detection (BFD) status monitoring unit and a port status modifying unit, and the CE side comprises a port status detecting unit and a service traffic switching unit, wherein
the BFD status monitoring unit is configured to monitor a BFD status of a uplink Pseudo Wire (PW) and inform the port status modifying unit to modify a status of a port, connected to the CE side, on the PE side to abnormal when the BFD status of the uplink PW is converted from a normal status to an abnormal status;
the port status modifying unit is configured to modify the status of the port, connected to the CE side, on the PE side according to an information from the BFD status monitoring unit;
the port status detecting unit is configured to detect a status of a port, connected to the PE side, on the CE side and inform the service traffic switching unit to switch service traffic when the port is abnormal; and
the service traffic switching unit is configured to switch the service traffic to a slave link after receiving an information from the port status detecting unit.

The service traffic switching unit is further configured to clean an Address Resolution Protocol (ARP) and a Media Access Control (MAC) learnt by the port, connected to the PE side, on the CE side before switching the service traffic to the slave link.

The BFD status monitoring unit is further configured to inform the port status modifying unit to modify the status of the port to normal when determining that the BFD status of the uplink PW is converted from the abnormal status to the normal status.

According to the dual-homing protection switching method and the dual-homing protection switching based on VPLS of the present invention, in the VPLS environment, the status of the VC in the VPLS is tracked by using the BFD of the PW and the CE equipment of the access side is dynamically switched according to the status change of the VC to realize the linkage of the CE side and PW side and the dual-homing protection switching of the CE. The present invention can inform the AC side in time for switching when the VC in the network goes wrong by the linkage of the CE side and PW side, so the present invention can avoid interrupting the traffic and improve the stability of communication.

### Brief Description of the Drawings

Fig. 1 is a flow chart of a dual-homing protection switching method based on VPLS of the present invention;
Fig. 2 is a schematic structural diagram of a dual-homing protection switching system based on VPLS of the present invention; and
Fig. 3 is a schematic diagram of a scenario according to Embodiment I of the present invention.

### Detailed Description of Embodiments

The basic idea of the present invention is: in the VPLS environment, the status of the VC in the VPLS is tracked by using the BFD of the PW and the CE equipment of the access side is dynamically switched according to the status change of the VC to realize the linkage of the CE side and PW side and the dual-homing protection switching of the CE.

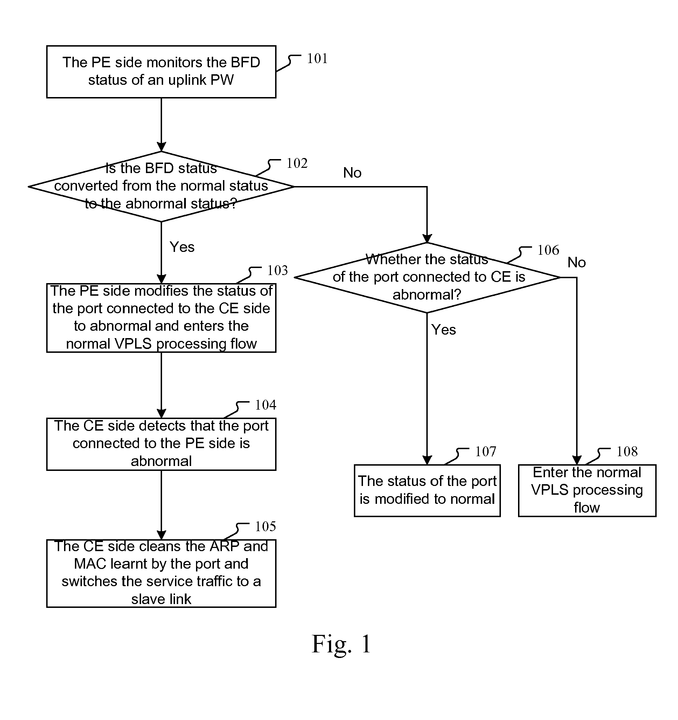

Fig. 1 is a flow chart of a dual-homing protection switching method based on VPLS of the present invention. As shown in Fig.1, the method generally comprises the steps as follows.

Step 101: a BFD status of an uplink PW is monitored by a PE side.

To realize the present invention, the BFD function of the uplink PW needs to be enabled on a VC side.

Step 102: it is determined whether the BFD status of the uplink PW is converted from the normal status to the abnormal status by the PE side. If so, Step 103 is executed; and if the BFD status of the uplink PW is converted from the abnormal status to the normal status, Step 106 is executed.

In general, the BFD status of the PW is "up", meaning normal; and the BFD status of the PW is "down", meaning abnormal.

Step 103: the status of a port connected to a CE side is modified to abnormal by the PE side and the normal VPLS processing flow is entered.

Step 104: it is detected that the port connected to the PE side is abnormal by the CE side.

Herein, since the CE equipment and PE equipment is connected directly, the CE side can immediately know that PE side has modified the status of the port connected to the CE to abnormal.

Step 105: the ARP and MAC learnt by the port is cleaned and the service traffic is switched to a slave link by the CE side.

Step 106: it is judged whether the status of the port connected to the CE is abnormal by the PE side. If so, Step 107 is executed; otherwise, Step 108 is executed.

Step 107: the status of the port is modified to normal.

Step 108: the normal VPLS processing flow is entered.

According to the description above, the present invention provides a dual-homing protection switching policy for the CE in the VPLS environment, and the CE side can rapidly know the status change of the uplink PW to switch services to another slave link quickly.

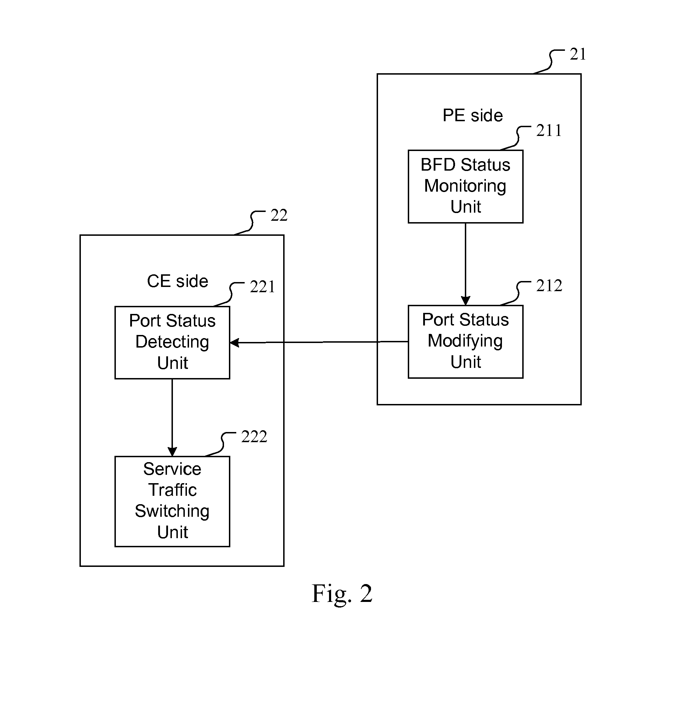

Fig. 2 is a schematic structural diagram of a dual-homing protection switching system based on VPLS of the present invention. As shown in Fig.2, the dual-homing protection switching system based on the VPLS of the present invention comprises: a PE side 21 and a CE side 22, wherein the PE side 21 comprises a BFD status monitoring unit 211 and a port status modifying unit 212, and the CE side 22 comprises a port status detecting unit 221 and a service traffic switching unit 222.

The BFD status monitoring unit 211 is configured to monitor a BFD status of an uplink PW and inform the port status modifying unit 212 to modify a status of a port, connected to the CE side, on the PE side to abnormal when the BFD status of the uplink PW is converted from the normal status to the abnormal status.

The port status modifying unit 212 is configured to modify the status of the port, connected to the CE side, on the PE side according to the information from the BFD status monitoring unit 211.

The port status detecting unit 221 is configured to detect the status of the port, connected to the PE side, on the CE side and inform the service traffic switching unit 222 to switch traffic when the port is abnormal.

The service traffic switching unit 222 is configured to switch the service traffic to a slave link after receiving the information from the port status detecting unit 221.

The service traffic switching unit 222 is further configured to clean the ARP and MAC learnt by the port, connected to the PE side, on the CE side before switching the service traffic to a slave link.

The BFD status monitoring unit 211 is further configured to inform the port status modifying unit 212 to modify the status of the port to normal when determining that the BFD status of the uplink PW is converted from the abnormal status to the normal status.

It can be known that the present invention has the beneficial effects as follows.
(1) The BFD status of the uplink PW is tracked on the PE, that is, when the BFD status of the uplink PW is down, the port, connected to the CE, on the PE is down, so the CE can immediately know that the port connected to PE is down, and thereby the ARP and MAC learnt by the port are cleaned and the incoming service is rapidly switched to another slave link. Therefore, the dual-homing protection of the CE side and the linkage of the CE side and PW side are realized;
(2) The reliability and fault processing capability of network are improved, that is, when the network on the PE side is in failure, the services on the CE side can be switched to a slave link quickly (because it is able to rapidly detect that the master link is down) to reduce the influence of network fault on the services, reduce the probability of service unavailability and improve the reliability of the services.
(3) A new dual-homing protection switching method for the CE side is provided by the present invention by using the current protocol and technology without increasing the complexity of protocol processing.

The technical solution of the present invention will be further described in detail with reference to an embodiment.

### First Embodiment

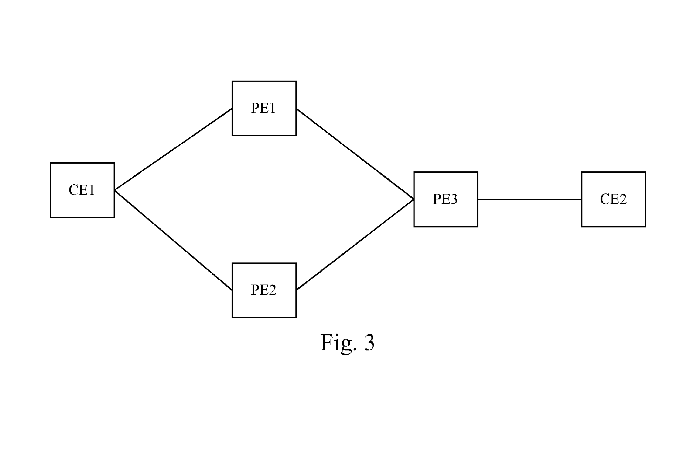

Fig. 3 is a schematic diagram of a scenario according to Embodiment I of the present invention. As shown in Fig.3, the CE1 equipment is attached to the PE1 and PE2 equipment both, belonging to a same VLAN. The dual-homing of pseudo wires is enabled on PE3, wherein the master pseudo wire is the from PE3 to PE1 and the slave pseudo wire is from PE3 to PE2. In the normal case, the master pseudo wire from PE1 to PE3 is in working state, and the slave pseudo wire from PE3 to PE2 is in inhibitory state and starts working when the master pseudo wire is down.

In this embodiment, when the BFD status of the PW on PE1 is down, PE1 makes the port on the AC side down (that is, the port, connected to the CE, on the PE is down). The port, directly connected to PE1, on the CE equipment is down immediately and the ARP and MAC learnt by the port are deleted quickly. Meanwhile, the incoming service traffic is switched to a slave link.

The above is only the preferred embodiment of the present invention, and not intended to limit the scope of protection of the present invention.

## Claims

1. A dual-homing protection switching method based on Virtual Private LAN Service (VPLS), **characterized by** comprising:
when determining that a Bidirectional Forwarding Detection (BFD) status of an uplink Pseudo Wire (PW) is converted from a normal status to an abnormal status, a Provider Edge (PE) side modifying a status of a port connected to a Customer Edge (CE) side, on the PE side to abnormal; and
when detecting that a port connected to the PE side is abnormal, the CE side switching service traffic to a slave link.

2. The method according to Claim 1, **characterized in that** before the CE side switches the service traffic to the slave link, the method further comprises: cleaning an Address Resolution Protocol (ARP) and a Media Access Control (MAC) learnt by the port, connected to the PE side, on the CE side.

3. The method according to Claim 1, **characterized in that** the method further comprises:
when determining that the BFD status of the uplink PW is converted from the abnormal status to the normal status and the status of the port, connected to the CE side, on the PE side is abnormal, the PE side modifying the status of the port to normal.

4. A dual-homing protection switching system based on Virtual Private LAN Service (VPLS), **characterized by** comprising: a Customer Edge (CE) side and a Provider Edge (PE) side, wherein the PE side comprises a Bidirectional Forwarding Detection (BFD) status monitoring unit and a port status modifying unit, and the CE side comprises a port status detecting unit and a service traffic switching unit, wherein
the BFD status monitoring unit is configured to monitor a BFD status of a uplink Pseudo Wire (PW) and inform the port status modifying unit to modify a status of a port, connected to the CE side, on the PE side to abnormal when the BFD status of the uplink PW is converted from a normal status to an abnormal status;
the port status modifying unit is configured to modify the status of the port, connected to the CE side, on the PE side according to an information from the BFD status monitoring unit;
the port status detecting unit is configured to detect a status of a port, connected to the PE side, on the CE side and inform the service traffic switching unit to switch service traffic when the port is abnormal; and
the service traffic switching unit is configured to switch the service traffic to a slave link after receiving an information from the port status detecting unit.

5. The system according to Claim 4, **characterized in that**
the service traffic switching unit is further configured to clean an Address Resolution Protocol (ARP) and a Media Access Control (MAC) learnt by the port, connected to the PE side, on the CE side before switching the service traffic to the slave link.

6. The system according to Claim 4, **characterized in that**
the BFD status monitoring unit is further configured to inform the port status modifying unit to modify the status of the port to normal when determining that the BFD status of the uplink PW is converted from the abnormal status to the normal status.
